# EUROPÄISCHE PATENTANMELDUNG

(11) **EP 2 050 996 A1**
(43) Veröffentlichungstag der Anmeldung: **22.04.2009**
(21) Anmeldenummer: 08169594.2
(22) Anmeldetag: 15.11.2004
(51) Int. Cl.: F16L 37/138

(54) **Steckbarer und verrastbarer Leitungsverbinder**

(30) Priorität: 17.12.2003 DE 20319558 U
(62) Teilanmeldung aus: 04798203.8
(71) Anmelder: Voss Automotive GmbH, 51688 Wipperfürth (DE)
(72) Erfinder: Hagen, Harald, 51688 Wipperfürth (DE); Bilstein, Rozália, 51688 Wipperfürth (DE); Isenburg, Marco, 40885 Ratingen (DE)
(74) Vertreter: Patentanwälte Dr. Solf & Zapf

(57) **Zusammenfassung**

Die Erfindung betrifft einen steckbaren und verrastbaren Leitungsverbinder (1) zum Anschluß mindestens einer Medienleitung, insbesondere Kraftstoffleitung, an ein Verbindergegenstück (6). Der Leitungsverbinder (1) besteht aus einem Verbinderstück (2) mit einem Steckabschnitt (8), der mit einem komplementären Steckabschnitt (10) des Verbindergegenstückes (6) mediendicht zusammensteckbar ist, und weist mindestens einen, insbesondere mindestens zwei sich in Steckrichtung erstreckende, radialelastische Federarme (12) auf, die an ihren freien Enden Rastansätze (14) zum rastenden Hintergreifen einer Raststufe (16) des Verbindergegenstückes (6) in der zusammengesteckten Stellung aufweisen. Ferner ist ein in axialer Richtung zwischen einer die Federarme (12) für eine radiale Rastbewegung freigebenden Ausgangsstellung (Fig. 4, 5) und einer die Federarme (12) zur Sicherung gegen ihre Rastbewegung umschließenden Sicherungsstellung (Fig. 6) bewegbares Sicherungselement (4) vorgesehen, welches in der Sicherungsstellung über Rastmittel (18) fixiert ist. Hierbei ist das Sicherungselement (4) auch in der Ausgangsstellung über die Rastmittel (18) fixiert, wobei die Rastmittel (18) derart ausgebildet sind, dass eine zur Bewegung des Sicherungselementes (4) aus der Ausgangsstellung in die Sicherungsstellung aufzubringende Verschlußkraft (F1) kleiner ist als eine zur umgekehrten Bewegung aus der Sicherungsstellung in Richtung der Ausgangsstellung aufzubringende Öffnungskraft (F2). Zusätzlich oder alternativ ist vorgesehen, dass das Sicherungselement (4) mit den Rastmitteln (18) sowie die Federarme (12) mit ihren Rastansätzen (14) in Anpassung an das Verbindergegenstück (6) derart ausgebildet sind, dass das Sicherungselement (4) als manueller Handhabungsangriff zum Stecken der Verbindung verwendbar ist, wobei durch Beaufschlagung des Sicherungselementes (4) mit einer in Steckrichtung wirkenden Steckkaft (F) zuerst die Steckabschnitte (8, 10) bis in die verrastete Stellung der Federarme (12) zusammensteckbar sind und erst dann das Sicherungselement (4) bis in die Sicherungsstellung bewegbar ist.

## Beschreibung

Die vorliegende Erfindung betrifft einen steckbaren und verrastbaren Leitungsverbinder mit einem Verbinderstück zum Anschluß mindestens einer Medienleitung, insbesondere Kraftstoffleitung, an ein Verbindergegenstück, nach dem Oberbegriff des Anspruchs 1.

Ein solcher Leitungsverbinder ist beispielsweise in der DE 29 52 468 A1 beschrieben. Dabei ist das mit einer Rohrleitung zu verbindende Verbinderstück mit seinem als Steckerschaft ausgebildeten Steckabschnitt in eine Bohrung des Steckabschnittes des Verbindergegenstückes einsteckbar. Hierbei übergreift das Verbinderstück mit Federarmen einen mit einer äußeren Ringwulst versehenen Kragen des Verbindergegenstückes. Zur Sicherung dieser Verrastung ist als Sicherungselement eine Haltehülse von hinten über die Federarme aufschiebbar. Eine axiale Sicherung dieser Haltehülse erfolgt mittels auf der Außenseite der Federarme angeformter Schnappwülste, die in eine Ringnut in der Innenseite der Haltehülse einrasten, wenn die Haltehülse sich in ihrer Endstellung (Sicherungsstellung) befindet. Die Verrastung erfolgt somit im freien Endbereich der Federarme mit einem in Umfangsrichtung geschlossen, durchgehenden Hülsenabschnitt der Haltehülse, was die Handhabung erschwert.

Der vorliegenden Erfindung liegt die Aufgabe zugrunde, einen derartigen Leitungsverbinder bezüglich seiner Sicherheit gegen ungewolltes Lösen der Steckverbindung sowie auch bezüglich seiner Handhabung zu verbessern.

Erfindungsgemäß wird dies gemäß dem Anspruch 1 dadurch erreicht, dass das Sicherungselement auch in der Ausgangsstellung über die Rastmittel fixiert ist, wobei die Rastmittel derart ausgebildet sind, dass eine zur Bewegung des Sicherungselementes aus der Ausgangsstellung in die Sicherungsstellung aufzubringende Verschlußkraft kleiner ist als eine zur umgekehrten Bewegung aus der Sicherungsstellung in Richtung der Ausgangsstellung aufzubringende Öffnungskraft.

Durch die höhere Öffnungskraft wird eine erhöhte Sicherheit gegen ungewolltes Lösen erreicht, und die relativ geringere Verschlußkraft trägt zu einer einfachen Handhabung beim Steckvorgang bei.

Zusätzlich oder aber alternativ dazu kann erfindungsgemäß nach dem Anspruch 2 vorgesehen sein, dass das Sicherungselement mit den Rastmitteln sowie die Federarme mit ihren Rastansätzen in Anpassung an das Verbindergegenstück derart ausgebildet sind, dass das Sicherungselement als manueller Handhabungsangriff zum Stecken der Verbindung verwendbar ist, wobei durch manuelle Beaufschlagung (nur) des Sicherungselementes mit einer in Steckrichtung wirkenden Steckkraft zuerst die Steckabschnitte bis in die verrastete Stellung der Federarme zusammensteckbar sind und erst dann das Sicherungselement bis in die Sicherungsstellung bewegbar ist. Durch diese vorteilhafte Ausgestaltung ist es möglich, die Steckverbindung allein durch Ergreifen des Sicherungselementes zu stecken. Umgekehrt kann das Sicherungselement auch als Handhabe zum Lösen dienen, indem durch manuelle Beaufschlagung mit einer Lösekraft das Sicherungselement erst in Richtung seiner Ausgangsstellung zurückbewegt wird, und anschließend wird über einen Bewegungsanschlag das Verbinderstück mitgenommen und von dem Verbindergegenstück getrennt.

Diese Ausgestaltung führt zu einer einfachen und komfortablen Handhabung beim Stecken und Lösen. Dazu ist es zudem vorteilhaft, wenn die Rastmittel und die Federarme mit den Rastansätzen in Anpassung an das Verbindergegenstück so ausgebildet sind, dass die zur Bewegung des Sicherungselementes aus der Ausgangsstellung in die Sicherungsstellung aufzubringende Verschlußkraft größer als die zum Zusammenstecken der Steckabschnitte bis in ihre verrastete Stellung aufzubringende Steckkraft ist. In weiterer vorteilhafter Ausgestaltung ist dazu das Verbinderstück im zusammenwirkenden Bereich der Federarme und des Sicherungselementes derart ausgebildet, dass die Verschlußkraft während des Steckvorgangs zeitweise durch radiales Spreizen der Federarme des Verbinderstückes erhöht wird, wobei vorzugsweise am äußeren Umfang der Federarme radial vorstehende Ansätze angeordnet sind. Diese Ansätze wirken in einer leicht gespreizten Stellung der Federarme als Anschläge für das Sicherungselement. Die Ansätze weisen aber eine radial derart geringe Höhe auf, dass nach dem Verrasten der Federarme das Sicherungselement ungehindert über die Ansätze hinaus weiter in die Sicherungsstellung bewegbar ist.

In weiterer Ausgestaltung der Erfindung oder alternativ zu den obigen Maßnahmen ist das Sicherungselement derart ausgebildet, dass eine Trennung seiner Sicherungsfunktion und seiner Rastfunktion erreicht wird. Konstruktiv sind dazu ein geschlossener Sperrringabschnitt und mehrere radialelastische Sicherungsrastarme in einer axial versetzten Anordnung vorgesehen. Durch diese Funktionstrennung wird eine sichere Arretierung der Federarme des Verbinderstückes erreicht, indem der Sperrringabschnitt die Federarme mit geringem Spiel umschließt, und die Rastung kann unabhängig davon so ausgelegt sein, dass eine gute Handhabung beim Betätigen des Sicherungselementes erreicht wird.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll die Erfindung genauer erläutert werden. Dabei zeigen:
- Fig. 1: eine Perspektivansicht eines Verbinderstückes eines erfindungsgemäßen Leitungsverbinders,
- Fig. 2: eine gesonderte Perspektivansicht eines Sicherungselementes des erfindungsgemäßen Leitungsverbinders in einer zu dem Verbinderstück gemäß Fig. 1 zum Aufsetzen lagerichtigen Anordnung,
- Fig. 3: eine Längsschnittansicht eines Verbindergegenstückes,
- Fig.4: eine Seitenansicht in Pfeilrichtung IV gemäß Fig. 1 auf das Verbinderstück mit aufgesetztem und in einer Ausgangsstellung angeordnetem Sicherungselement,
- Fig. 5: einen Schnitt in der Ebene V - V gemäß Fig. 4 mit zusätzlich eingezeichnetem Verbindergegenstück in der zusammengesteckten und verrasteten, jedoch noch nicht durch das Sicherungselement gesicherten Position,

- Fig. 6: eine Darstellung analog zu Fig. 5, jedoch in der Sicherungsstellung des Sicherungselementes,

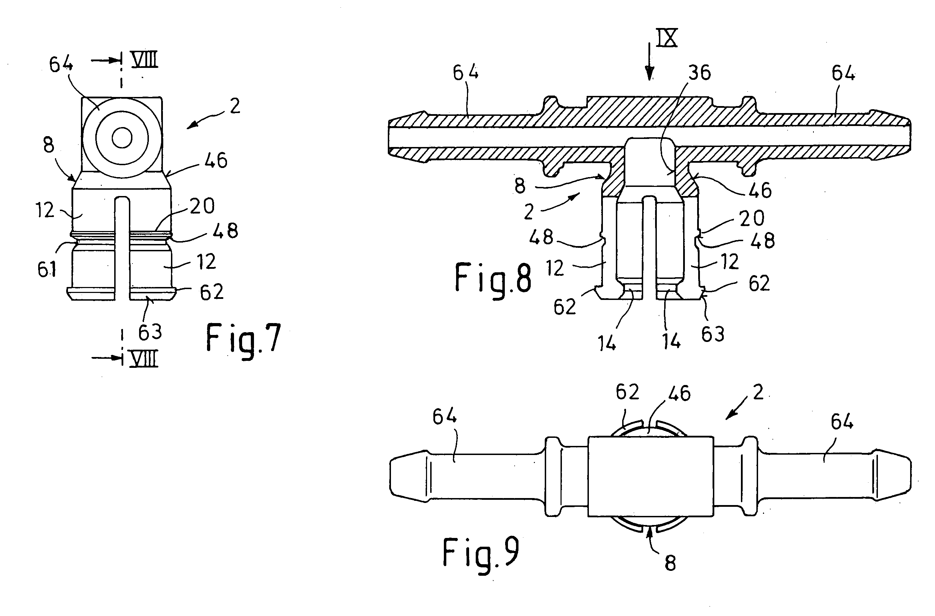

- Fig.7: eine Ansicht analog zu Fig. 4 nur des Verbinderstückes ohne Sicherungselement,
- Fig. 8: einen Schnitt analog zu Fig. 5 in der Ebene VIII - VIII gemäß Fig. 7,
- Fig. 9: eine Draufsicht auf das Verbinderstück in Pfeilrichtung IX gemäß Fig. 8,
- Fig. 10: eine Draufsicht des Sicherungselementes in Pfeilrichtung X gemäß Fig. 2,
- Fig. 11: einen Schnitt durch das Sicherungselement in der Ebene XI - XI gemäß Fig. 10 und
- Fig. 12: eine Ausschnittvergrößerung im Bereich XII gemäß Fig. 11 zur Erläuterung der Geometrie im Bereich der Rastmittel des Sicherungselementes.

In den verschiedenen Figuren der Zeichnung sind gleiche Teile stets mit den gleichen Bezugszeichen versehen und brauchen daher in der Regel auch jeweils nur einmal beschrieben zu werden.

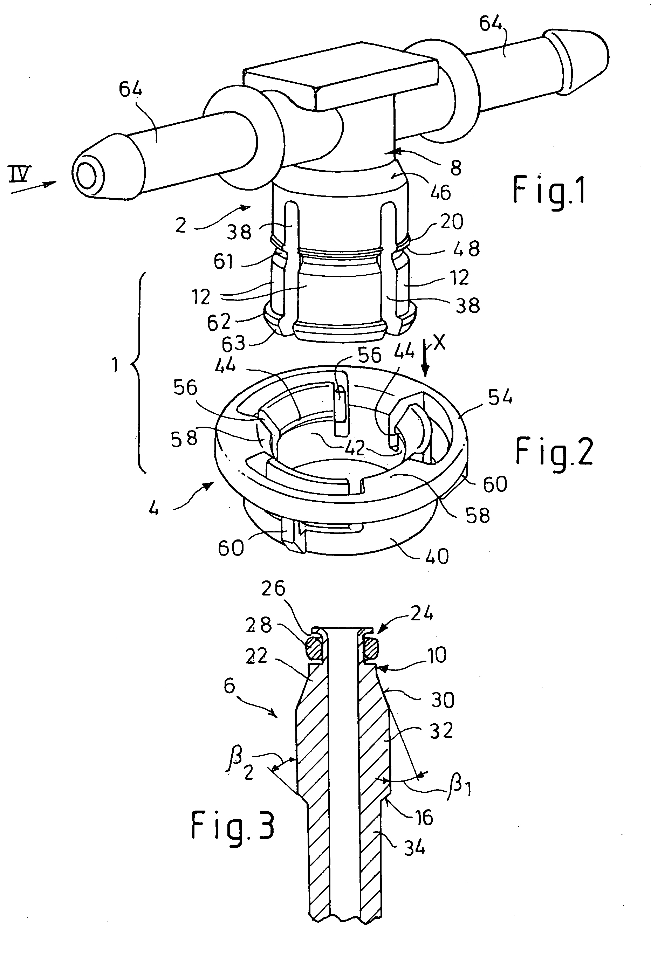

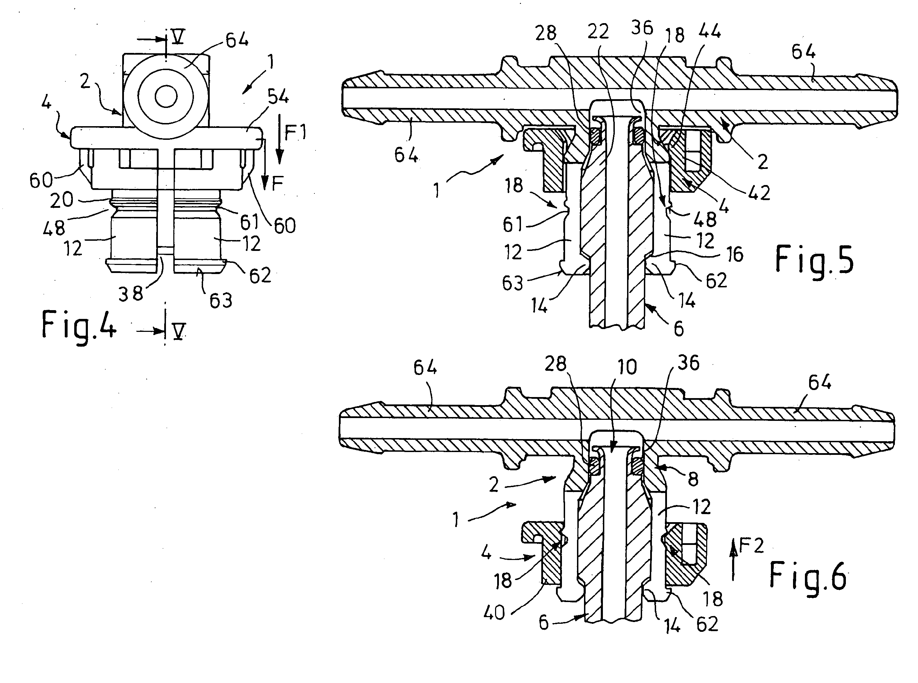

Wie sich zunächst aus Fig. 1 bis 3 ergibt, besteht ein erfindungsgemäßer Leitungsverbinder 1 aus einem Verbinderstück 2 und einem Sicherungselement 4. Das Verbinderstück 2 dient zum Anschluß mindestens einer nicht dargestellten Medienleitung, insbesondere Kraftstoffleitung, an ein Verbindergegenstück 6. Dazu wird auch auf die Fig. 5 und 6 verwiesen.

Das Verbinderstück 2 weist einen Steckabschnitt 8 auf, der mit einem komplementären Steckabschnitt 10 des Verbindergegenstückes 6 mediendicht zusammensteckbar ist. Ferner weist das Verbinderstück 2 mindestens zwei, insbesondere - wie dargestellt - vier sich in Steckrichtung erstreckende, radial elastische Federarme 12 auf, die an ihren freien Enden Rastansätze 14 zum rastenden, kraftformschlüssigen Hintergreifen einer Raststufe 16 des Verbindergegenstückes 6 in der zusammengesteckten Stellung aufweisen (vergleiche Fig. 5 und 6).

Wie sich weiter insbesondere aus Fig. 5 und 6 ergibt, ist das Sicherungselement 4 in axialer Richtung zwischen einer die Federarme 12 für eine radiale Rastbewegung freigebenden Ausgangsstellung (Fig. 4 und 5) und einer die Federarme 12 zur Sicherung gegen ihre Rastbewegung umschließenden Sicherungsstellung (Fig. 6) bewegbar. Dabei ist das Sicherungselement 4 in der Sicherungsstellung (Fig. 6) über Rastmittel 18 kraftformschlüssig fixiert.

Erfindungsgemäß ist das Sicherungselement 4 auch in der Ausgangsstellung gemäß Fig. 4 und 5 über die Rastmittel 18 fixiert. Dabei sind die Rastmittel 18 derart ausgebildet, dass eine zur Bewegung des Sicherungselementes 4 aus der Ausgangsstellung in die Sicherungsstellung aufzubringende Verschlußkraft F1 (siehe Fig. 4) kleiner ist als eine zur umgekehrten Bewegung aus der Sicherungsstellung in Richtung der Ausgangsstellung aufzubringende Öffnungskraft F2 (siehe Fig. 6). Die konstruktiven Maßnahmen hierfür werden im folgenden noch genauer erläutert werden.

Es ist weiterhin erfindungswesentlich, dass das Sicherungselement 4 mit den Rastmitteln 18 sowie die Federarme 12 mit ihren Rastansätzen 14 in Anpassung an die Ausgestaltung des Verbindergegenstückes 6 derart ausgebildet sind, dass das Sicherungselement 4 als manueller Handhabungsangriff zum Stecken (und Lösen) der Verbindung verwendbar ist, indem durch manuelle Beaufschlagung des Sicherungselementes 4 mit einer in Steckrichtung wirkenden Steckkraft F zuerst die Steckabschnitte 8, 10 bis in die verrastete Stellung der Federarme 12 zusammensteckbar sind und erst dann das Sicherungselement 4 bis in seine Sicherungsstellung bewegbar ist. Dazu sind die Rastmittel 18 und die Federarme 12 mit den Rastansätzen 14 in Anpassung an das Verbindergegenstück 6 so ausgebildet, dass die zur Bewegung des Sicherungselementes 4 aus der Ausgangsstellung in die Sicherungsstellung aufzubringende Verschlußkraft F1 größer als die zum Zusammenstecken der Steckabschnitte 8, 10 bis in ihre verrastete Stellung aufzubringende Steckkraft F ist (vgl. Fig. 4). Hierbei ist es besonders vorteilhaft, wenn das Verbinderstück 2 in dem miteinander zusammenwirkenden Bereich der Federarme 12 und des Sicherungselementes 4 derart ausgebildet ist, dass die Verschlußkraft F1 während des Steckvorgangs zeitweise durch radiales Spreizen der Federarme 12 des Verbinderstückes 2 erhöht wird. Vorzugsweise sind dabei am äußeren Umfang der Federarme 12 radial vorstehende Ansätze 20 angeordnet, die in einer beim anfänglichen Steckvorgang leicht gespreizten Stellung der Federarme 12 als Anschläge für das Sicherungselement 2 fungieren, so dass das Sicherungselement 4 noch nicht in seine Sicherungsstellung bewegt werden kann, sondern erst das Verbinderstück 2 mit dem Verbindergegenstück 6 zusammengesteckt wird, bis die Federarme 12 radial nach innen einrasten. Nachfolgend kann dann das Sicherungselment 4 ungehindert über die Ansätze 20 weiter in die Sicherungsstellung bewegt werden.

In der dargestellten, bevorzugten Ausführungsform ist der Leitungsverbinder 1 speziell für ein Verbindergegenstück 6 konzipiert, wie es in Fig. 3, 5 und 6 dargestellt ist. Dabei ist der Steckabschnitt 10 als Einsteckteil 22 (Steckerschaft) ausgebildet. Dieses Einsteckteil 22 weist an seinem freien Ende einen Dichtabschnitt 24 mit einem in einer Ringnut 26 sitzenden Dichtring 28 auf. An den Dichtabschnitt 24 schließt sich über eine Konusfläche 30 ein im Querschnitt erweiteter Bereich 32 an, der über die Raststufe 16 in einen verjüngten Bereich 34 übergeht (siehe dazu insbesondere Fig. 3). Die beim Steckvorgang zum radialen Spreizen der Federarme 12 des Verbinderstückes 2 vorgesehene Konusfläche 30 schließt mit der Steckachse einen relativ flachen Winkel β₁ ein, der insbesondere im Bereich von etwa 20° liegen kann. Die Raststufe 16 ist als konische Schrägfläche mit einem relativ steileren Winkel β₂ zur Steckachse von insbesondere etwa 50° ausgebildet. Aus den unterschiedlichen Winkel β₁ und β₂ ergibt sich, dass eine Lösekraft größer als eine Steckkraft ist. Dies erleichtert das Aufstecken und führt gleichzeitig zu einer hohen Sicherheit gegen ungewolltes Lösen.

Aufgrund der beschriebenen Ausgestaltung des Verbindergegenstückes 6 ist der Steckabschnitt 8 des Verbinderstückes 2 als entsprechend muffenartige Aufnahme 36 für das Einsteckteil 22 des Verbindergegenstückes 6 ausgebildet. An den Steckabschnitt 8 bzw. die Aufnahme 36 schließen sich die Federarme 12 einstückig an. Bevorzugt sind mehrere, beispielsweise vier Federarme 12 in einer radialsymmetrischen Umfangsverteilung und jeweils über axial und radial durchgehende Schlitze 38 voneinander getrennt vorgesehen.

Das Sicherungselement 4 ist mit einer ringförmigen Ausgestaltung koaxial und axial verschiebbar sowie unverlierbar auf dem Verbinderstück 2 angeordnet. Dabei weist das Sicherungselement 4 einen in Umfangsrichtung geschlossen Sperrringabschnitt 40 auf, der in der Sicherungsstellung (Fig. 6) die Federarme 12 in deren die radial nach innen weisenden Rastansätze 14 aufweisenden Endbereichen mit nur geringem Radialspiel, also im Wesentlichen spielfrei, umschließt.

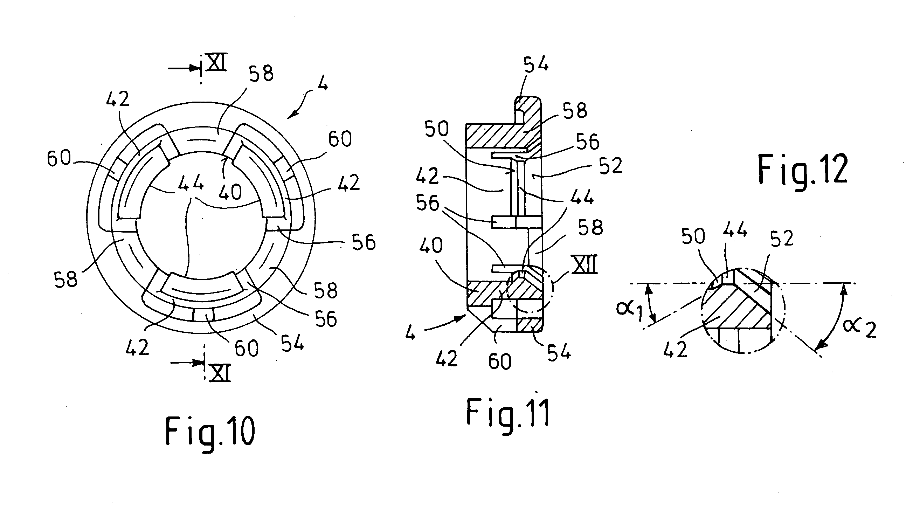

Die Rastmittel 18 bestehen aus mindestens zwei, im dargestellten Ausführungsbeispiel (siehe dazu insbesondere Fig. 2) drei radialelastischen Sicherungsrastarmen 42 des Sicherungselementes 4 und aus mit Rastelementen 44 der Sicherungsrastarme 42 zusammenwirkenden Raststufen 46, 48 des Verbinderstückes 2. Die Rastelemente 44 der Sicherungsrastarme 42 sind als radial nach innen weisende, nasenartige Ansätze ausgebildet, die in der Ausgangsstellung gemäß Fig. 4 und 5 über erste Rastflächen 50 (siehe insbesondere Fig. 12) mit einer ersten Raststufe 46 des Verbinderstückes 2 sowie in der Sicherungsstellung gemäß Fig. 6 über zweite Rastflächen 52 (Fig. 12) mit einer zweiten Raststufe 48 des Verbinderstückes 2 zusammenwirken. Hierbei ist es wesentlich, dass gemäß Fig. 12 die ersten und zweiten Rastflächen 50, 52 der Rastelemente 44 der Sicherungsrastarme 42 jeweils als konusartige Schrägflächen ausgebildet sind, die mit der Steckachse einen ersten spitzen Winkel α₁ bzw. einen zweiten spitzen Winkel α₂ einschließen, wobei der erste Winkel α₁ der ersten Rastflächen 50 kleiner als der zweite Winkel α₂ der zweiten Rastflächen 52 ist. Daraus resultiert das erfindungsgemäße Merkmal, dass die Verschlusskraft F1 kleiner als die Öffnungskraft F2 ist. Bei dem dargestellten, bevorzugten Ausführungsbeispiel beträgt α₁ etwa 30° und α₂ etwa 40°. Die Sicherungsrastarme 42 schließen sich einstückig an den Sperrringabschnitt 40 an und erstrecken sich axial in Löserichtung, d. h. entgegen der Steckrichtung. Somit sind die Rastmittel (Sicherungsrastarme 42 mit ihren Rastelementen 44) axial zu dem Sperrringabschnitt 40 versetzt angeordnet, so dass die Sicherungsfunktion von der Rastfunktion getrennt (entkoppelt) ist. Vorteilhafterweise besitzt das Sicherungselement 4 zudem einen manuell greifbaren Betätigungsabschnitt 54, der derart unabhängig von den Sicherungsrastarmen 42 direkt mit dem Sperrringabschnitt 40 verbunden ist, dass eine manuelle Betätigung ohne Beeinträchtigung der elastischen Beweglichkeit der Sicherungsrastarme 42 möglich ist. Dazu ist der Betätigungsabschnitt 54 mit dem Sperrringabschnitt 40 einstückig über jeweils in Umfangsrichtung zwischen den Sicherungsrastarmen 42 angeordnete und über Schlitze 56 beabstandete Verbindungsstege 58 verbunden. Es ist hierbei zweckmäßig, wenn der Betätigungsabschnitt 54 als umfangsgemäß durchgehender Ring ausgebildet ist, der die Sicherungsrastarme 42 koaxial mit radialem Abstand umschließt (siehe insbesondere Fig. 2 und 10). Durch diese koaxiale Anordnung, wobei der ringförmige Betätigungsabschnitt 56 in axialer Richtung etwa im Bereich der Rastelemente 44 liegt, ergibt sich eine vorteilhaft kurze Baulänge des gesamten Sicherungselementes 4.

In einer weiteren bevorzugten Ausgestaltung ist der ringförmige Betätigungsabschnitt 54 in seinen den Sicherungsrastarmen 42 jeweils radial gegenüberliegenden Umfangsbereichen über zusätzliche stegartige Verbindungsabschnitte 60 direkt, d. h. von den Sicherungsrastarmen 42 unabhängig, mit dem Sperrringabschnitt 40 verbunden. Durch diese Verbindungsabschnitte 60 wird eine Versteifung der sich jeweils in Umfangsrichtung frei über die Bereiche der Sicherungsrastarme 42 erstreckenden Ringabschnitte erreicht.

Die oben beschriebenen Ansätze 20 der Federarme 12 sind bevorzugt als Ringstegabschnitte ausgebildet und in Steckrichtung gesehen unmittelbar vor der zweiten Raststufe 48 angeordnet. Diese Raststufe 48 ist als eine Flankenfläche einer ringnutförmigen Vertiefung 61 gebildet.

Es ist weiterhin zweckmäßig, wenn die Federarme 12 des Verbinderstückes 2 an ihren freien Enden radial nach außen vorstehende Ansätze 62 als Endanschläge für das Sicherungselement 4 zur unverlierbaren, aber dennoch unter elastischer Verformung der Federarme 12 montierbaren und demontierbaren Halterung aufweisen. Für die Montage des Sicherungselementes 4 durch axiales Aufsetzen ist es vorteilhaft, wenn die Federarme 12 endseitige Schrägflächen 63 aufweisen, die beim Aufsetzen des Sicherungselementes 4 eine dazu erforderliche Bewegung der Federarme 12 radial nach innen bewirken.

Das Verbinderstück 2 weist im Übrigen im Anschluß an den Steckabschnitt 8 mindestens einen Anschlußstutzen 64 für eine Medienleitung (Schlauch- oder Rohrleitung für ein beliebiges hydraulisches oder pneumatisches Druck- und/oder Strömungsmedium, wie z. B. Kraftstoff) auf. Bei der dargestellten Ausführungsform handelt es sich um einen T-Verbinder mit zwei koaxialen, in entgegengesetze Richtungen weisenden Anschlußstutzen 64, von denen der Steckabschnitt 8 mit den Federarmen 12 rechtwinklig abzweigt. Es ist jedoch auch eine Ausführung mit nur einem Anschlußstutzen 64 möglich, beispielsweise als Winkelverbinder mit einem bestimmten Winkel von z. B. 90° zwischen Steckabschnitt und Anschlußstutzen oder mit einem koaxial in die der Steckrichtung entgegengesetzte Richtung weisenden Anschlußstutzen.

Das Verbinderstück 2 ist mit seinen beschriebenen Teilen bevorzugt als einstückiges Formteil aus Kunststoff ausgebildet. Entsprechendes gilt auch für das Sicherungselement 4. Das Verbindergegenstück 6 kann aus einem beliebigen Material bestehen, beispielsweise aus einem Kunststoff oder Metall.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die in dem jeweiligen unabhängigen Anspruch definierte Merkmalskombination beschränkt, sondern kann auch durch jede beliebige andere Kombination von bestimmten Merkmalen aller insgesamt offenbarten Einzelmerkmale definiert sein. Dies bedeutet, daß grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für die jeweilige Erfindung zu verstehen.

## Patentansprüche

1. Steckbarer und verrastbarer Leitungsverbinder (1) zum Anschluß mindestens einer Medienleitung, insbesondere Kraftstoffleitung, an ein Verbindergegenstück (6), bestehend aus einem Verbinderstück (2) mit einem Steckabschnitt (8), der mit einem komplementären Steckabschnitt (10) des Verbindergegenstückes (6) mediendicht zusammensteckbar ist, und mit mindestens einem, insbesondere mindestens zwei sich in Steckrichtung erstreckenden, radialelastischen Federarmen (12), die an ihren freien Enden Rastansätze (14) zum rastenden Hintergreifen einer Raststufe (16) des Verbindergegenstückes (6) in der zusammengesteckten Stellung aufweisen, sowie mit einem in axialer Richtung zwischen einer die Federarme (12) für eine radiale Rastbewegung freigebenden Ausgangsstellung (Fig. 4, 5) und einer die Federarme (12) zur Sicherung gegen ihre Rastbewegung umschließenden Sicherungsstellung (Fig. 6) bewegbaren Sicherungselement (4), wobei das Sicherungselement (4) in der Sicherungsstellung über Rastmittel (18) fixiert ist,
**dadurch gekennzeichnet, dass** das Sicherungselement (4) auch in der Ausgangsstellung über die Rastmittel (18) fixiert ist, wobei die Rastmittel (18) derart ausgebildet sind, dass eine zur Bewegung des Sicherungselementes (4) aus der Ausgangsstellung in die Sicherungsstellung aufzubringende Verschlußkraft (F1) kleiner ist als eine zur umgekehrten Bewegung aus der Sicherungsstellung in Richtung der Ausgangsstellung aufzubringende Öffnungskraft (F2).

2. Leitungsverbinder nach Anspruch 1 oder nach dem Oberbegriff des Anspruchs 1,
**dadurch gekennzeichnet, dass** das Sicherungselement (4) mit den Rastmitteln (18) sowie die Federarme (12) mit ihren Rastansätzen (14) in Anpassung an das Verbindergegenstück (6) derart ausgebildet sind, dass das Sicherungselement (4) als manueller Handhabungsangriff zum Stecken der Verbindung verwendbar ist, wobei durch Beaufschlagung des Sicherungselementes (4) mit einer in Steckrichtung wirkenden Steckkaft (F) zuerst die Steckabschnitte (8, 10) bis in die verrastete Stellung der Federarme (12) zusammensteckbar sind und erst dann das Sicherungselement (4) bis in die Sicherungsstellung bewegbar ist.

3. Leitungsverbinder nach Anspruch 1 oder 2,
**dadurch gekennzeichnet, dass** dieRastmittel(18)unddie Federarme (12) mit den Rastansätzen (14) in Anpassung an das Verbindergegenstück (6) so ausgebildet sind, dass die zur Bewegung des Sicherungselementes (4) aus der Ausgangsstellung in die Sicherungsstellung aufzubringende Verschlußkraft (F1) größer als die zum Zusammenstecken der Steckabschnitte (8, 10) bis in ihre verrastete Stellung aufzubringende Steckkraft (F) ist.

4. Leitungsverbinder nach einem der Ansprüche 1 bis 3,
**dadurch gekennzeichnet, dass** das Verbinderstück (2) im zusammenwirkenden Bereich der Federarme (12) und des Sicherungselementes (4) derart ausgebildet ist, dass die Verschlußkraft (F1) während des Steckvorgangs zeitweise durch radiales Spreizen der Federarme (12) des Verbinderstückes (2) erhöht wird, wobei vorzugsweise am äußeren Umfang der Federarme (12) radial vorstehende Ansätze (20) angeordnet sind.

5. Leitungsverbinder nach einem der Ansprüche 1 bis 4,
**dadurch gekennzeichnet, dass** der Steckabschnitt (8) des Verbinderstückes (2) als muffenartige Aufnahme (36) für den als Einsteckteil (22) ausgebildeten Steckabschnitt (10) des Verbindergegenstückes (6) ausgebildet ist.

6. Leitungsverbinder nach einem der Ansprüche 1 bis 5,
**dadurch gekennzeichnet, dass** der Steckabschnitt (8) einstückig in die Federarme (12) übergeht.

7. Leitungsverbinder nach einem der Ansprüche 1 bis 6,
**dadurch gekennzeichnet, dass** mehrere, vorzugsweise vier Federarme (12) in einer radialsymmetrischen Umfangsverteilung und jeweils über axiale und radiale Schlitze (38) voneinander getrennt vorgesehen sind.

8. Leitungsverbinder nach einem der Ansprüche 1 bis 7,
**dadurch gekennzeichnet, dass** dasSicherungselement(4)mit einer ring- oder hülsenförmigen Ausgestaltung koaxial und verschiebbar auf dem Verbinderstück (2) angeordnet ist.

9. Leitungsverbinder nach einem der Ansprüche 1 bis 8 oder nach dem Oberbegriff des Anspruchs 1,
**dadurch gekennzeichnet, dass** das Sicherungselement (4) derart ausgebildet ist, dass eine Trennung von Sicherungsfunktion und Rastfunktion erreicht wird.

10. Leitungsverbinder nach einem der Ansprüche 1 bis 9,
**dadurch gekennzeichnet, dass** das Sicherungselement (4) einen in Umfangsrichtung geschlossenen Sperrringabschnitt (40) aufweist, der in der Sicherungsstellung die Federarme (12) in deren die radial nach innen weisenden Rastansätze (14) aufweisenden Endbereichen mit geringem Radialspiel umschließt.

11. Leitungsverbinder nach einem der Ansprüche 1 bis 10,
**dadurch gekennzeichnet, dass** die Rastmittel (18) aus mindestens einem, insbesondere mindestens zwei radialelastischen Sicherungsrastarmen (42) des Sicherungselementes (4) und aus mit Rastelementen (44) der Sicherungsrastarme (42) zusammenwirkenden Raststufen (46, 48) des Verbinderstückes (2) bestehen.

12. Leitungsverbinder nach Anspruch 10 und 11,
**dadurch gekennzeichnet, dass** der Sperrringabschnitt (40) und die Sicherungsrastarme (42) in axialer Richtung versetzt angeordnet sind.

13. Leitungsverbinder nach Anspruch 11 oder 12,
**dadurch gekennzeichnet, dass** dieRastelemente(44)der Sicherungsrastarme (42) als radial nach innen weisende Ansätze ausgebildet sind, die in der Ausgangsstellung über erste Rastflächen (50) mit einer ersten Raststufe (46) des Verbinderstückes (2) sowie in der Sicherungsstellung über zweite Rastflächen (52) mit einer zweiten Raststufe (48) des Verbinderstückes (2) zusammenwirken.

14. Leitungsverbinder nach Anspruch 13,
**dadurch gekennzeichnet, dass** die ersten und zweiten Rastflächen (50, 52) der Rastelemente (44) der Sicherungsrastarme (42) jeweils als konusartige Schrägfläche ausgebildet sind, die mit der Steckachse einen ersten bzw. zweiten spitzen Winkel (α ₁/ α ₂) einschließen, wobei der erste Winkel (α₁) der ersten Rastflächen (50) kleiner als der zweite Winkel (α₂) der zweiten Rastflächen (52) ist.

15. Leitungsverbinder nach einem der Ansprüche 11 bis 14,
**dadurch gekennzeichnet, dass** die Sicherungsrastarme (42) einstückig von dem Sperrringabschnitt (40) ausgehen und sich axial in Löserichtung erstrecken.

16. Leitungsverbinder nach einem der Ansprüche 10 bis 15,
**dadurch gekennzeichnet, dass** das Sicherungselement (4) einen Betätigungsabschnitt (54) aufweist, der derart mit dem Sperrringabschnitt (40) verbunden ist, dass mittels des Betätigungsabschnittes (54) eine manuelle Betätigung des Sicherungselementes (4) ohne Beeinträchtigung der elastischen Beweglichkeit der Sicherungsrastarme (42) möglich ist.

17. Leitungsverbinder nach Anspruch 16,
**dadurch gekennzeichnet, dass** der Betätigungsabschnitt (54) unabhängig von den Sicherungsrastarmen (42) mit dem Sperringabschnitt (40) verbunden ist, und zwar insbesondere über jeweils zwischen den Sicherungsrastarmen (42) angeordnete Verbindungsstege (58).

18. Leitungsverbinder nach Anspruch 16 oder 17,
**dadurch gekennzeichnet, dass** der Bestätigungsabschnitt (56) als durchgehender Ring ausgebildet ist, der die Sicherungsrastarme (42) koaxial mit radialem Abstand umschließt.

19. Leitungsverbinder nach Anspruch 18,
**dadurch gekennzeichnet, dass** der als Ring ausgebildete Betätigungsabschnitt (54) in seinen den Sicherungsrastarmen (42) jeweils radial gegenüberliegenden Umfangsbereichen über zusätzliche Verbindungsabschnitte (60) direkt mit dem Sperrringabschnitt (40) verbunden ist.

20. Leitungsverbinder nach einem der Ansprüche 1 bis 19,
**dadurch gekennzeichnet, dass** dieFederarme(12)des Verbinderstückes (2) an ihren freien Enden radial nach außen vorstehende Ansätze (62) als Endanschläge für das Sicherungselement (4) aufweisen.

21. Leitungsverbinder nach einem der Ansprüche 1 bis 20,
**dadurch gekennzeichnet, dass** das Verbinderstück (2) im Anschluß an den Steckabschnitt (8) mindestens einen Anschlußstutzen (64) für eine Medienleitung aufweist.

22. Leitungsverbinder nach einem der Ansprüche 5 bis 21,
**dadurch gekennzeichnet, dass** dasEinsteckteil(22)des Verbindergegenstückes (6) an seinem freien Ende einen Dichtabschnitt (24) mit einem in einer Ringnut (26) sitzenden Dichtring (28) aufweist.

23. Leitungsverbinder nach Anspruch 22,
**dadurch gekennzeichnet, dass** sich an den Dichtabschnitt (24) ein über eine Konusfläche (30) im Querschnitt erweiterter Bereich (32) anschließt, der über die Raststufe (16) in einen verjüngten Bereich (34) übergeht.

24. Leitungsverbinder nach Anspruch 23,
**dadurch gekennzeichnet, dass** die beim Steckvorgang zum radialen Spreizen der Federarme (12) des Verbinderstückes (2) vorgesehene Konusfläche (30) mit der Steckachse einen relativ flachen Winkel (β₁) einschließt, der insbesondere im Bereich von 20° liegt.

25. Leitungsverbinder nach Anspruch 23 oder 24,
**dadurch gekennzeichnet, dass** die Raststufe (16) als konische Schrägfläche mit einem relativ steileren Winkel (β₂) zur Steckachse von insbesondere etwa 50° ausgebildet ist.
